# EUROPÄISCHE PATENTANMELDUNG

(11) **EP 3 011 878 A1**
(43) Veröffentlichungstag der Anmeldung: **27.04.2016**
(21) Anmeldenummer: 15189057.1
(22) Anmeldetag: 09.10.2015
(51) Int. Cl.: A47J 43/07

(54) **VERFAHREN UND KÜCHENMASCHINE ZUM ZUBEREITEN EINES ZUBEREITUNGSGUTS**

(30) Priorität: 21.10.2014 DE 102014115346
(71) Anmelder: Vorwerk & Co. Interholding GmbH, 42275 Wuppertal (DE)
(72) Erfinder: Cornelißen, Markus, 53332 Bornheim (DE)
(74) Vertreter: Müller, Enno

(57) **Zusammenfassung**

Die Erfindung betrifft zunächst ein Verfahren zum Zubereiten eines Zubereitungsguts (4) mittels einer elektromotorisch betriebenen Küchenmaschine, wobei ein in einem Rührgefäß (3) der Küchenmaschine enthaltenes Zubereitungsgut (4) mittels eines vorzugsweise als Messersatz ausgebildeten Rührwerks (2) bearbeitet, insbesondere zerkleinert, wird. Zur vorteilhaften Verbesserung, insbesondere im Hinblick auf einen verbesserten Bearbeitungserfolg, wird vorgeschlagen, dass das Rührwerk (2) in einer der Bearbeitung des Zubereitungsguts (4) zeitlich vorausgehenden Vorbereitungsphase in eine zweite Rotationsrichtung (y) bewegt wird, welche einer für die Bearbeitung des Zubereitungsguts (4) vorgesehenen ersten Rotationsrichtung entgegengesetzt ist, wobei das Rührwerk (2) anschließend zur Bearbeitung des Zubereitungsguts (4) in einer Arbeitsphase in die erste Rotationsrichtung bewegt wird. Weiter betrifft die Erfindung eine Küchenmaschine

## Beschreibung

Die Erfindung betrifft zunächst ein Verfahren zum Zubereiten eines Zubereitungsguts mittels einer elektromotorisch betriebenen Küchenmaschine, wobei ein in einem Rührgefäß der Küchenmaschine enthaltenes Zubereitungsgut mittels eines vorzugsweise als Messersatz ausgebildeten Rührwerks bearbeitet, insbesondere zerkleinert wird.

Im Stand der Technik ist es bekannt, elektromotorisch betriebene Küchenmaschinen zum Zubereiten eines Zubereitungsguts und insbesondere auch zum Zerkleinern eines Zubereitungsguts zu verwenden. Ein in einem Rührgefäß der Küchenmaschine angeordneter Messersatz wird dabei kontinuierlich rotiert und zerkleinert die in den Eingriffbereich des Messersatzes gelangenden Speiseanteile.

Darüber hinaus ist es im Stand der Technik ebenfalls bekannt, das Rührwerk einer Küchenmaschine für andere Bearbeitungsvorgänge zu nutzen. Die Druckschrift WO 95/29614 A1 offenbart bspw. eine Küchenmaschine, deren Rührwerk für das Rühren von Teig verwendet wird. Dabei ist eine Rührwerk-Einstellung (Teig-Rührschal-tung) vorgesehen, in welcher programmgesteuert Rührphasen durch regelmäßige Stillstände unterbrochen sind.

Nachteilig bei den bisher im Stand der Technik bekannten Verfahren ist, dass das zu bearbeitende Zubereitungsgut regelmäßig bei der Bewegung des Messers mitbewegt oder - insbesondere ein Zubereitungsgut mit geringer Massendichte, wie Kräuter - aufgewirbelt wird. Eine Bearbeitung des Zubereitungsguts, insbesondere eine Zerkleinerung dieser, ist dann nicht mehr möglich, da das Zubereitungsgut entweder mit dem rotierenden Rührwerk mitrotiert oder aufgrund in dem Rührgefäß erzeugter Wirbel aus dem Eingriffbereich des Rührwerks gelangt.

Es ist daher Aufgabe der Erfindung, ein Verfahren zum Zubereiten eines Zubereitungsguts, insbesondere zum Zerkleinern eines Zubereitungsguts, zu schaffen, welches zum einen den Bearbeitungserfolg verbessert und zum anderen auch für leicht aufwirbelbares Zubereitungsgut geeignet ist, wie bspw. Kräuter. Idealerweise soll das Bearbeitungsergebnis im Falle einer Zerkleinerung demjenigen Ergebnis entsprechen, welches sich ergibt, wenn man das Zubereitungsgut manuell mit einem Messer auf einer Schneidunterlage zerkleinert.

Zur Lösung der vorgenannten Aufgabe schlägt die Erfindung vor, dass das Rührwerk in einer der Bearbeitung des Zubereitungsguts zeitlich vorausgehenden Vorbereitungsphase in eine zweite Rotationsrichtung bewegt wird, welche einer für die Bearbeitung des Zubereitungsguts vorgesehenen ersten Rotationsrichtung entgegengesetzt ist, wobei das Rührwerk anschließend zur Bearbeitung des Zubereitungsguts in einer Arbeitsphase in die erste Rotationsrichtung bewegt wird.

Gemäß der Erfindung wird das Rührwerk programmgesteuert während der Zubereitung eines Zubereitungsguts in einer vorbestimmten Abfolge und Zeit sowie mit vorbestimmter Drehzahl in zwei entgegengesetzte Rotationsrichtungen bewegt. Dabei erfolgt vor der eigentlichen Bearbeitung des Zubereitungsguts, d.h. bspw. einer Zerkleinerung des Zubereitungsguts, eine Rotation des Rührwerks in eine Richtung, welche einer Rotationsrichtung der nachfolgenden Arbeitsphase entgegengesetzt ist. Sofern das Rührwerk in der Arbeitsphase bspw. im Uhrzeigersinn rotiert, erfolgt in der Vorbereitungsphase eine Rotation gegen den Uhrzeigersinn. Die Rotation während der Vorbereitungsphase dient dazu, einen zubereitungsgutfreien Bereich zwischen zumindest einem Teilbereich des Rührwerks und des in dem Rührgefäß enthaltenen Zubereitungsgut zu schaffen. Der Teilbereich des Rührwerks kann bspw. eine Schneide eines Messersatzes sein. Dabei wird die Schneide entgegen ihrer üblichen Schneidrichtung rotiert, wobei sich auf der der Schneide abgewandten Seite des Messers ein Zubereitungsguthaufen bildet und auf der der Messerschneide zugewandten Seite des Messer ein Freiraum entsteht, welcher frei von Zubereitungsgutanteilen ist. Die Größe des entstehenden Zubereitungsguthaufens und des Freiraums hängt dabei von der Anzahl der Messer, dem Winkelbereich der Rotation während der Vorbereitungsphase und der Materialbeschaffenheit des Zubereitungsguts ab. In der sich an die Vorbereitungsphase anschließenden Arbeitsphase wird der Messersatz in Schneidrichtung, d.h. die erste Rotationsrichtung, rotiert, wobei die Schneide erst nach Überwinden des zubereitungsgutfreien Freiraumes mit dem angehäuften Zubereitungsgut in Kontakt tritt und dieses zerkleinert. Das erfindungsgemäße Verfahren ähnelt somit dem manuellen Zerschneiden von ruhenden Zubereitungsgutanteilen auf einer Schneidunterlage. Das Schneideergebnis wird somit gegenüber den im Stand der Technik bekannten Zerkleinerungsverfahren bei Küchenmaschinen verbessert. Der wesentliche Vorteil besteht darin, dass das zu zerkleinernde Zubereitungsgut bei einer Beschleunigung des Rührwerks nicht mitbewegt wird, sondern das Rührwerk zuerst ohne Kontakt mit dem zu zerkleinernden Zubereitungsgut beschleunigt wird und erst nach einer bestimmten Zeitspanne auf das zu zerkleinernde Zubereitungsgut trifft. Im Sinne der Erfindung kann es sich bei der Bearbeitung des Zubereitungsguts nicht nur um ein Zerkleinern mittels einer Messerschneide handeln, sondern bspw. auch um andere Bearbeitungsarten wie Rühren, Kneten usw. Ebenso ist auch die Bearbeitung eines Zubereitungsguts mittels einer der Messerschneide abgewandten stumpfen Klingenseite möglich, mittels welcher bspw. eher ein Zerschlagen als ein Zerschneiden des Zubereitungsguts erreicht werden kann.

Das als Messersatz ausgebildete Rührwerk kann beispielsweise ein in der Offenlegungsschrift DE 102 12 029 A1 beschriebener Messersatz sein. Dieser Messersatz weist zwei um 90 Grad versetzte an einer gemeinsamen zentralen Rotationsachse befestigte Messer auf. Jedes der beiden Messer weist zwei in Bezug auf die Rotationsachse gegenüberliegende sichelförmige Endabschnitte auf, die in Rotationsrichtung jeweils auf einer Seite eine Schneide und auf einer anderen Seite eine Knetbrust aufweisen. Je nach der Rotationsrichtung des Messersatzes kann somit entweder eine Bearbeitung eines Zubereitungsgutes mittels der Schneide oder mittels der Knetbrust durchgeführt werden. Beispielsweise wird der Messersatz in einer Arbeitsphase in eine Richtung rotiert, in welcher die Schneide eines Endabschnittes der Knetbrust desselben Endabschnittes vorauseilt, während der Messersatz in einer Vorbereitungsphase in eine Richtung rotiert, in welcher die Knetbrust der Schneide vorauseilt. Das Vorauseilen der Knetbrust während der Vorbereitungsphase hat insbesondere den Vorteil, dass das Zubereitungsgut mittels einer größeren quer zu der Rotationsrichtung stehenden Angriffsfläche verschoben werden kann als dies bei einer Schneide der Fall ist. Grundsätzlich können jedoch auch beide Seiten der Endabschnitte gleichartig, d. h. beide als Schneide oder beide als Knetbrust, ausgebildet sein. Unter dem Begriff der Schneide wird im Sinne der Erfindung eine durch Schleifen geschärfte Klinge bezeichnet, wobei die Schneide in Rotationsrichtung spitz ausläuft und an der in Rotationsrichtung dünnsten Stelle eine Dicke von maximal 0,6 mm aufweist. Demgegenüber weist eine Knetbrust eine in Rotationsrichtung wirkende Angriffsfläche mit einer Breite von mindestens 1 mm auf. Diese Breite bezieht sich dabei auf eine Projektion der Oberfläche der Knetbrust in Rotationsrichtung und kann zum einen durch eine Knetbrust bereitgestellt werden, welche senkrecht zur Rotationsrichtung steht, zum anderen aber auch durch eine Knetbrust, deren Breite in eine Richtung entgegen der Rotationsrichtung bis zu einer vorgegebenen maximalen Breite ansteigt. Es empfiehlt sich eine Steigung, bei welcher die maximale Breite der Knetbrust nach einer maximalen Strecke von 1mm entgegen der Rotationsrichtung erreicht ist. Die Dickenangaben beziehen sich jeweils auf einen Teilbereich der Schneide bzw. der Knetbrust, der in Längserstreckung des Messer-Endabschnittes (radiale Richtung in Bezug auf die Rotationsachse des Messers) zumindest 30% der Länge des Endabschnittes aufweist.

Es wird vorgeschlagen, dass das Rührwerk zwischen einer Arbeitsphase und einer Vorbereitungsphase während einer der Arbeitsphase zeitlich folgenden Ruhephase still steht. Die Ruhephase kann dabei im Wesentlichen so lange andauern bis sich das in dem Rührgefäß enthaltene Zubereitungsgut nicht mehr bewegt. Das Anwenden einer Ruhephase zeitlich nach der Arbeitsphase eignet sich insbesondere bei leicht aufzuwirbelndem Zubereitungsgut, welche bei der Rotation des Rührwerks aufgrund der sich in dem Rührgefäß ausbildenden Luftströmungen aufsteigen und somit aus der Reichweite des Rührwerks gelangen. Ein ggf. in dem Rührgefäß aufgewirbeltes Zubereitungsgut kann somit während der Ruhephase, d.h. vor dem Durchlaufen einer weiteren Vorbereitungsphase, auf den Boden des Rührgefäßes herabsinken und somit in Kontakt mit dem Rührwerk gelangen. Die Zeitdauer der Ruhephase hängt von der Art des Zubereitungsguts ab. Besonders leichtes Zubereitungsgut, wie bspw. Kräuter, benötigt eine größere Zeitdauer, um auf den Rührgefäßboden herabzusinken als bspw. hochgewirbelte Fleischstückchen. Es wird vorgeschlagen, dass die Ruhephase - je nach der Art des Zubereitungsguts - eine Zeitdauer von ungefähr 0,1 Sekunden bis 10 Sekunden, insbesondere 0,5 Sekunden bis 3 Sekunden aufweist. Dabei ist die längere Zeitdauer jeweils für leichteres Zubereitungsgut vorgesehen. Die Ruhephase beginnt mit dem Stillstand des Rührwerkes und endet in dem Moment, in welchem das Zubereitungsgut im Wesentlichen vollständig auf dem Boden des Rührgefäßes liegt. Es wird dabei ein Zustand angestrebt, in welchem sich das Zubereitungsgut sowohl in vertikaler als auch in horizontaler Richtung nicht mehr bewegt, wobei für den Bearbeitungserfolg des Verfahrens vorrangig ist, dass sich das Zubereitungsgut innerhalb des Eingriffbereiches des Rührwerks befindet. Insofern fallen unter den Begriff "nicht mehr bewegt" auch solche Zustände, in welchem das Zubereitungsgut zwar noch nicht vollständig ruht, sich jedoch bereits in dem Eingriffbereich des Rührwerks befindet.

Es wird darüber hinaus vorgeschlagen, dass die Abfolge einer Vorbereitungsphase und einer Arbeitsphase zyklisch wiederholt wird. Alternativ wird vorgeschlagen, dass die Abfolge einer Vorbereitungsphase, einer Arbeitsphase und einer Ruhephase zyklisch wiederholt wird. Es ist somit vorgesehen, dass die Abfolge einer Vorbereitungsphase und einer Arbeitsphase nicht nur einmalig erfolgt, sondern mehrmals hintereinander, sodass sich an eine Arbeitsphase wiederum eine Vorbereitungsphase bzw. zuerst eine Ruhephase und dann eine Vorbereitungsphase anschließt. Das Erfordernis, zwischen einer Arbeitsphase und einer darauf folgenden Vorbereitungsphase eine Ruhephase zu durchlaufen, hängt von der Art und Beschaffenheit des zu bearbeitenden Zubereitungsguts ab. Sofern es sich bei dem Zubereitungsgut bspw. um Fleisch handelt, kann eine Ruhephase entfallen. Sofern es sich bei dem Zubereitungsgut jedoch z. B. um sehr leichtes Zubereitungsgut, wie bspw. Kräuter, handelt, empfiehlt es sich, eine Ruhephase vorzusehen, innerhalb welcher das Zubereitungsgut nach einer Aufwirbelung wieder auf den Boden des Rührgefäßes zurücksinken kann. Sofern das Zubereitungsgut nur in besonders geringem Umfang einer Verwirbelung unterliegt und somit unmittelbar nach Stoppen des Rührwerkes auf den Boden des Rührgefäßes zurücksinkt, bspw. innerhalb weniger als 1 Sekunde, kann die Ruhephase auch Teil der Vorbereitungsphase sein, wobei ggf. die Vorbereitungsphase eine größere Zeitdauer oder einen größeren Winkelbereich einschließt, sodass die herabsinkenden Zubereitungsgutanteile bis zur Beendigung der Vorbereitungsphase im Wesentlichen ruhen. Die Anzahl der Wiederholungen der Abfolge von Vorbereitungsphase und Arbeitsphase bzw. Vorbereitungsphase, Arbeitsphase und Ruhephase hängt im Wesentlichen von der Art der Bearbeitung, der Art des Zubereitungsguts und der Art des verwendeten Rührwerks ab. Grundsätzlich können bspw. mehrere hundert Zyklen vorgesehen sein, um das Zubereitungsgut in den gewünschten Bearbeitungszustand zu versetzen.

Des Weiteren wird vorgeschlagen, dass die Vorbereitungsphase eine Rotation des Rührwerks um einen Winkelbereich von 45 Grad bis 225 Grad aufweist, insbesondere von 90 Grad bis 180 Grad. Der vorgeschlagene Winkelbereich, den das Rührwerk innerhalb der Vorbereitungsphase durchläuft, eignet sich insbesondere für Rührwerke mit um 90 Grad bis 180 Grad versetzten Bearbeitungsflächen. Bspw. kann es sich bei dem Rührwerk um einen Messersatz mit vier Schneiden handeln, die in einem Winkelabstand von 90 Grad zueinander versetzt sind. Bei einer Rotation des Rührwerks um einen Winkelbereich von 90 Grad wird somit genau derjenige Winkelbereich zurückgelegt, welcher dem Abstand zwischen zwei Messerschneiden entspricht. Insofern kommt es während der Vorbereitungsphase zu einer örtlichen Anhäufung der gesamten innerhalb des Winkelbereiches von 90 Grad angeordneten Zubereitungsgutanteile. Sofern das Rührwerk darüber hinaus um mehr als 90 Grad rotiert wird, kann der Zubereitungsguthaufen ggf. weiter verdichtet werden. Dies hängt von der Konsistenz des jeweiligen Zubereitungsguts ab. Der entstehende Freiraum zwischen der in Arbeitsrichtung vorderen Seite des Rührwerks und dem Zubereitungsguthaufen bezeichnet gleichzeitig die zur Verfügung stehende freie Beschleunigungsstrecke des Rührwerks und ist somit gleichzeitig auch ein Maß für die Geschwindigkeit, die das Rührwerk bis zu einem Kontakt mit dem Zubereitungsgut erreichen kann.

Es wird vorgeschlagen, dass die Vorbereitungsphase eine Zeitdauer von ungefähr 0,5 Sekunden bis 5 Sekunden, insbesondere 0,5 Sekunden bis 2 Sekunden aufweist. In der Vorbereitungsphase wird das Rührwerk in die zweite Rotationsrichtung rotiert und somit in die Startstellung für die anschließende Arbeitsphase gebracht. Je langsamer die Vorbereitungsphase erfolgt, d.h. je länger deren Zeitdauer ist, desto geringer ist das Risiko der Erzeugung von Luftwirbeln, durch welche besonders leichtes Zubereitungsgut, wie bspw. Kräuter, in dem Rührgefäß aufgewirbelt werden können. In der Praxis hat sich für die Vorbereitungsphase eine Zeitdauer von 0,5 Sekunden bis 5 Sekunden als optimal herausgestellt. In dieser Zeit kann das Rührwerk um vorteilhaft 90 Grad bis 180 Grad rotieren. Dabei gilt, dass die Vorbereitungsphase kürzer sein kann, je größer die Masse der in dem Rührgefäß vorhandenen Zubereitungsgutanteile ist.

Es ist vorgesehen, dass die Arbeitsphase eine Rotation des Rührwerks um einen Winkelbereich von einmal 360 Grad bis fünfmal 360 aufweist, insbesondere von einmal 360 Grad bis dreimal 360 Grad. Gemäß der Erfindung erfolgt die Rotation während der Arbeitsphase, d.h. die Rotation in die erste Rotationsrichtung, über einen größeren Winkelbereich als die Rotation während der Vorbereitungsphase, d.h. die Rotation in die zweite Rotationsrichtung. Grundsätzlich ist die Anzahl der Umdrehungen des Rührwerks pro Arbeitsphase nicht begrenzt. Um eine ungewünschte Aufwirbelung von Zubereitungsgutanteilen zu vermeiden, empfiehlt es sich jedoch, die Anzahl der Rotationen zu beschränken, vorteilhaft auf bis zu fünf vollständige Umdrehungen, d.h. bis zu fünfmal 360 Grad. Insbesondere empfiehlt sich eine ein- bis dreimalige Rotation bevor sich ggf. eine weitere Vorbereitungsphase und/oder Ruhephase anschließt.

Vorzugsweise ist der Betrag der Rotationsgeschwindigkeit des Rührwerks in der Arbeitsphase größer als in der Vorbereitungsphase, bevorzugt mindestens zehnmal so groß bis höchstens eintausend Mal so groß. Dabei trägt die Erfindung der Erkenntnis Rechnung, dass in der Vorbereitungsphase eine besonders niedrige Rotationsgeschwindigkeit empfehlenswert ist, während in der Arbeitsphase eine möglichst hohe Rotationsgeschwindigkeit vorteilhaft ist. Bspw. kann eine vollständige Umdrehung des Rührwerks in der Vorbereitungsphase, d.h. in die zweite Rotationsrichtung, 10 Sekunden in Anspruch nehmen, während diese in der Arbeitsphase nur eine Hundertstelsekunde oder weniger in Anspruch nimmt. Insbesondere kann die Drehzahl des Rührwerks in der Arbeitsphase mehr als zehntausend Umdrehungen in der Minute betragen.

Des Weiteren wird vorgeschlagen, dass die Ruhephase eine Zeitdauer von ungefähr 0,1 Sekunden bis 10 Sekunden, insbesondere 0,5 Sekunden bis 3 Sekunden aufweist. Insofern steht nach dem Anhalten des Rührwerkes und einer erneuten Rotation des Rührwerks eine Zeitdauer von ungefähr 0,1 Sekunden bis 10 Sekunden zur Verfügung, in welcher sich das zu bearbeitende Zubereitungsgut, welches ggf. in dem Rührgefäß aufgewirbelt wurde, wieder auf dem Boden des Rührgefäßes ablegen kann. Die benötigte Ruhephase variiert dabei je nach der Beschaffenheit, insbesondere der Masse, der einzelnen Zubereitungsgutanteile, wobei die Ruhephase umso kürzer sein kann, je schwerer ein Zubereitungsgutanteil, bspw. ein Basilikumblatt oder ein Fleischstückchen, ist.

Neben dem zuvor vorgestellten Verfahren zum Zubereiten eines Zubereitungsguts wird ebenfalls eine Küchenmaschine mit einem Rührgefäß, einem darin vorzugsweise als Messersatz ausgebildeten Rührwerk, einem Elektromotor zur Rotation des Rührwerks und einer Motorsteuerung zur Steuerung des Elektromotors vorgeschlagen, wobei die Motorsteuerung eingerichtet ist, den Elektromotor so zu steuern, dass das Rührwerk in einer einer Bearbeitung eines Zubereitungsguts zeitlich vorausgehenden Vorbereitungsphase in eine zweite Rotationsrichtung bewegt wird, welche einer für die Bearbeitung des Zubereitungsguts vorgesehenen ersten Rotationsrichtung entgegengesetzt ist, wobei das Rührwerk anschließend zur Bearbeitung des Zubereitungsguts in einer Arbeitsphase in die erste Rotationsrichtung bewegt wird.

Die erfindungsgemäße Küchenmaschine verfügt somit über eine Motorsteuerung, die das Rührwerk zur Durchführung des erfindungsgemäßen Verfahrens steuern kann. Insbesondere ist die Motorsteuerung eingerichtet, in zeitlicher Abfolge eine Vorbereitungsphase, eine Arbeitsphase und ggf. eine Ruhephase zu steuern, sodass ein in dem Rührgefäß enthaltenes Zubereitungsgut optimal zerkleinert werden kann. Die zuvor in Verbindung mit dem erfindungsgemäßen Verfahren ausgeführten Merkmale gelten analog auch für die das Verfahren ausführende Küchenmaschine.

Im Folgenden wird die Erfindung anhand eines Ausführungsbeispiels näher erläutert. Es zeigen:
- Figur 1:: Eine Frontansicht einer erfindungsgemäßen Küchenmaschine,
- Figur 2:: die Küchenmaschine gemäß Figur 1 während einer Arbeitsphase,
- Figur 3:: die Küchenmaschine gemäß Figur 1 während einer Ruhephase,
- Figur 4:: die Küchenmaschine gemäß Figur 1 während einer Vorbereitungsphase,
- Figur 5:: eine Ansicht in ein Rührgefäß von oben,
- Figur 6:: das Rührgefäß gemäß Figur 5 unmittelbar nach einer Vorbereitungsphase,
- Figur 7:: das Gefäß gemäß Figur 5 während einer Arbeitsphase,
- Figur 8:: eine Frontansicht einer Küchenmaschine gemäß einer weiteren Ausführungsvariante.

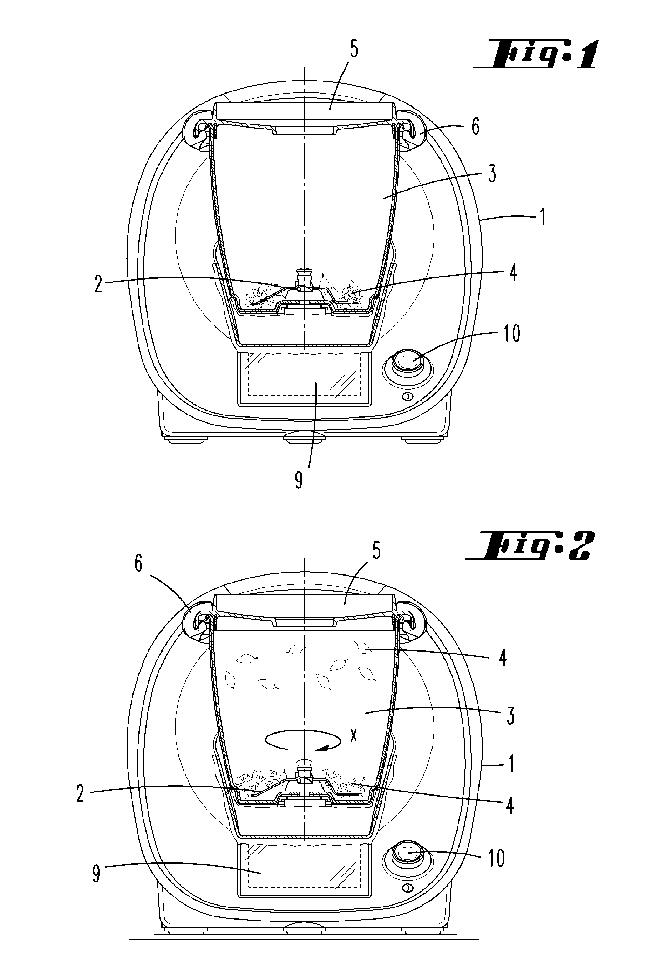

Die in den Figuren 1 bis 4 dargestellte Küchenmaschine 1 verfügt über ein Rührgefäß 3, in welchem ein Rührwerk 2, hier als Messersatz ausgebildet, angeordnet ist. Das Rührgefäß 3 ist mit einem Deckel 5 verschlossen. Rührgefäß 3 und Deckel 5 sind mittels zweier Verriegelungselemente 6, hier bevorzugt als Verriegelungswalzen ausgebildet, verriegelt. Darüber hinaus verfügt die Küchenmaschine 1 in üblicher Weise über ein Display 9 und einen Schalter 10 zur Steuerung der Gerätefunktionen bzw. zum Ein- und Ausschalten der Küchenmaschine 1. Die Küchenmaschine 1 kann darüber hinaus weitere Einrichtungen zur Zubereitung von Zubereitungsgut aufweisen. Hierzu zählen bspw. eine Heizeinrichtung (nicht dargestellt) oder ähnliches.

In dem Rührgefäß 3 ist ein Zubereitungsgut 4 angeordnet, welche mittels des Rührwerks 2 der Küchenmaschine 1 bearbeitet werden soll. Bei dem Zubereitungsgut 4 handelt es sich wie dargestellt, bspw. um Basilikumblätter. Das Zubereitungsgut 4 befindet sich in dem Bodenbereich des Rührgefäßes 3, d.h. gleichzeitig auch in dem Eingriffbereich des Rührwerks 2, sodass das Zubereitungsgut 4 bei einer Rotation des Rührwerks 2 in Kontakt mit den Bearbeitungsflächen des Rührwerkes 2 gelangen kann.

Während einer in Figur 2 dargestellten Arbeitsphase rotiert das Rührwerk 2 in eine erste Rotationsrichtung x. Die erste Rotationsrichtung x ist dabei eine Rotationsrichtung im Uhrzeigersinn. Wie in Figur 2 dargestellt, kommt es bei besonders leichtem Zubereitungsgut 4, wie hier bspw. Basilikum, während der Arbeitsphase zu einer Aufwirbelung des Zubereitungsguts 4 innerhalb des Rührgefäßes 3, wodurch sich ein Anteil des zu bearbeitenden Zubereitungsguts 4 nicht mehr in dem Eingriffbereich des Rührwerkes 2 befindet. Insofern ist dieser Anteil des Zubereitungsguts 4 der Bearbeitung durch das Rührwerk 2 entzogen. Anstatt eines besonders leichten Zubereitungsguts 4 im Sinne der Erfindung, bei welcher die einzelnen Zubereitungsgutanteile, d.h. hier die Basilikumblätter, eine geringe Masse aufweisen und somit in erhöhtem Maße einer Verwirbelung unterliegen, kann es sich bei dem Zubereitungsgut 4 stattdessen auch um Zubereitungsgut 4 mit einer größeren Masse pro Zubereitungsgutanteil handeln. Bspw. kann das Zubereitungsgut 4 ein stückiges Gemenge sein, wie bspw. einzelne Fleischteilchen eines teilweise zerkleinerten Fleischstückes, so wie es bspw. bei der Zubereitung von "Geschnetzeltem" auftritt.

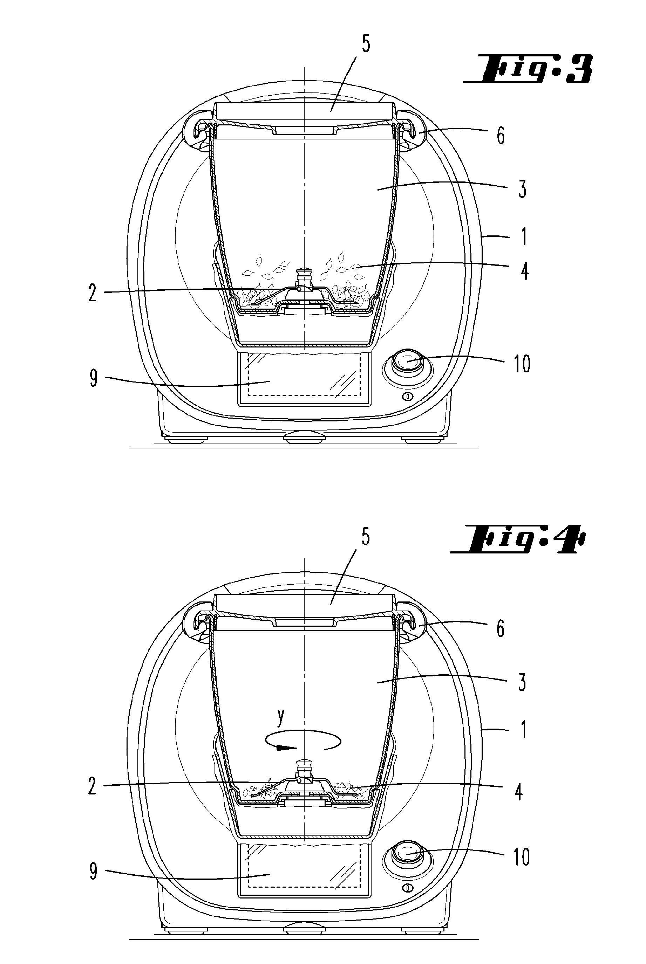

Figur 3 zeigt die Küchenmaschine 1 während einer erfindungsgemäßen Ruhephase, in welcher das Rührwerk 2 steht und die ggf. aufgewirbelten Zubereitungsgutanteile auf den Boden des Rührgefäßes 3 sinken können.

Figur 4 zeigt die Küchenmaschine 1 während einer anschließenden Vorbereitungsphase, innerhalb welcher sich das Rührwerk 2 in eine zweite Rotationsrichtung y gegen den Uhrzeigersinn bewegt.

Die Erfindung funktioniert wie in den Figuren 2 bis 4 bzw. 5 bis 7 dargestellt. Dabei kann das Verfahren grundsätzlich in einem Zustand gestartet werden, in welchem sich das Zubereitungsgut 4 bereits vollständig auf dem Boden des Rührgefäßes 3 befindet, bspw. direkt nach dem Einfüllen des Zubereitungsguts 4 in das Rührgefäß 3. Alternativ kann das Verfahren auch ein Zyklus einer Mehrzahl von Zyklen während einer Zubereitung des Zubereitungsguts 4 sein. Im letztgenannten Fall wird das Verfahren ausgehend von der in Figur 2 dargestellten Arbeitsphase beschrieben.

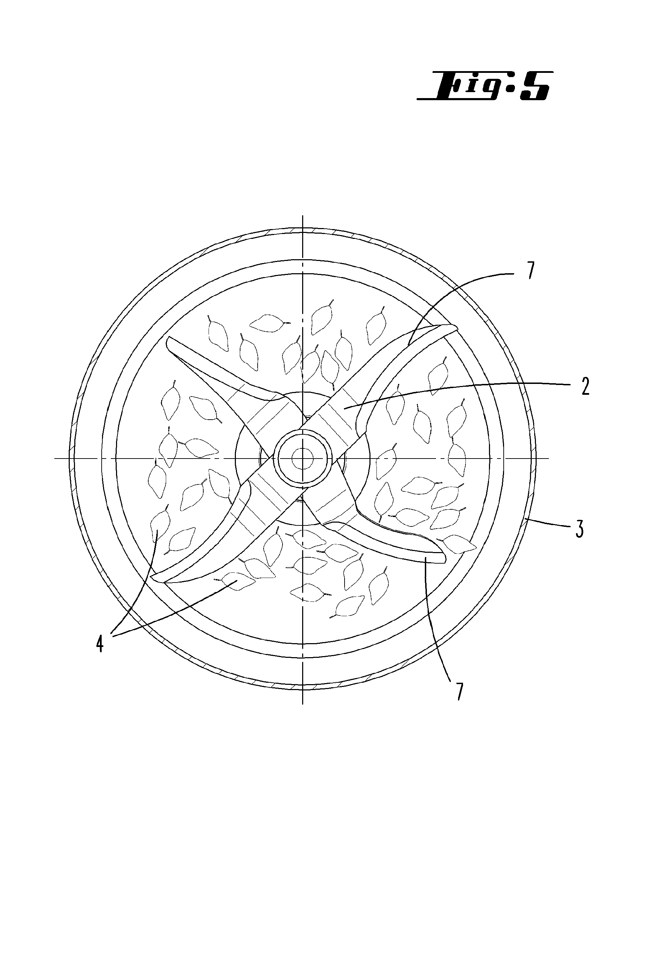

Gemäß Figur 5 befindet sich ein Zubereitungsgut 4 innerhalb des Rührgefäßes 3. Das Zubereitungsgut 4 besteht aus einer Vielzahl von Zubereitungsgutanteilen, hier eine Vielzahl einzelner Basilikumblätter. Der dargestellte Zustand kann bspw. unmittelbar nach Beendigung einer Arbeitsphase oder einer Ruhephase auftreten, in welcher das Rührwerk 2 still steht, d.h. vor einer darauf folgenden Vorbereitungsphase. Während der Ruhephase kann - wie bspw. in Figur 3 dargestellt - noch ein Anteil des Zubereitungsguts 4 innerhalb des Rührgefä-βes 3 aufgewirbelt sein. In diesem Fall wird die Ruhephase solange fortgesetzt, bis das Zubereitungsgut 4 im Wesentlichen vollständig in den Eingriffbereich des Rührwerks 2 gelangt ist.

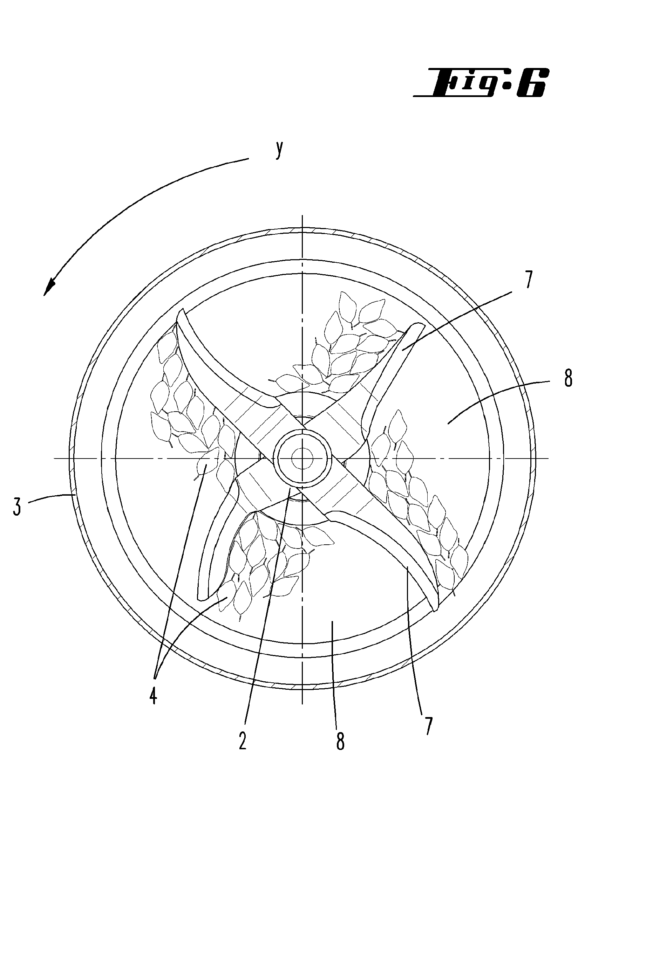

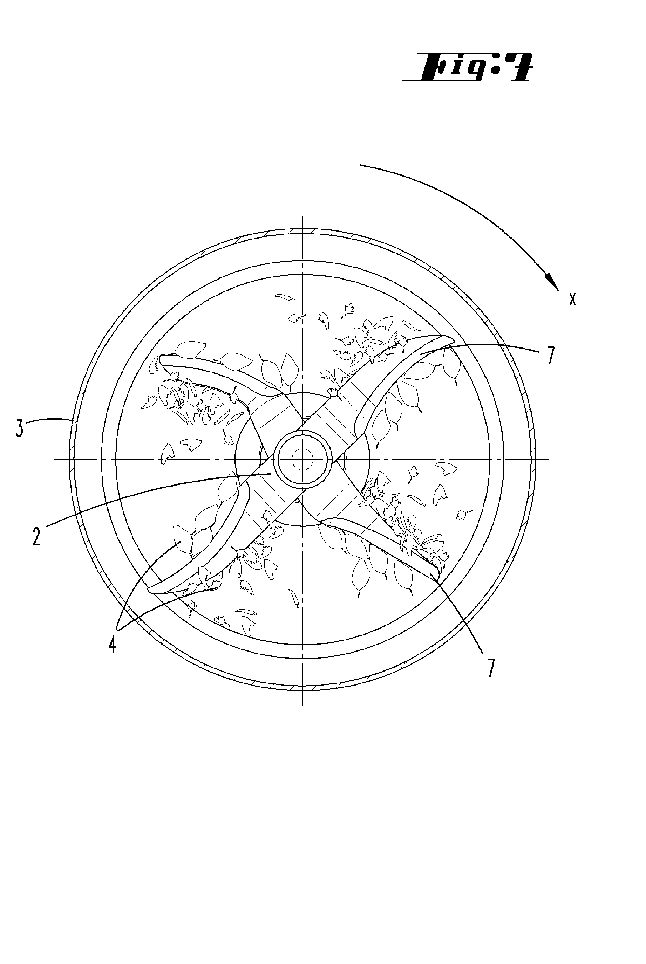

Ausgehend von dem in Figur 5 dargestellten Zustand wird das Rührwerk 2 während der in Figur 6 dargestellten Vorbereitungsphase in eine zweite Rotationsrichtung y bewegt. Diese zweite Rotationsrichtung y betrifft eine Rotationsrichtung entgegen dem Uhrzeigersinn, wobei die einer Schneide 7 des Rührwerks 2 abgewandte Seite in Rotationsrichtung y vorauseilt. Diese Vorbereitungsphase dient dazu, das in dem Rührgefäß 3 angeordnete Zubereitungsgut 4 in Zubereitungsguthaufen anzuordnen, wobei sich zwischen jeweils einer Schneide 7 des Rührwerks 2 und einem Zubereitungsguthaufen ein Freiraum 8 ausbildet, in welchem keine Anteile der Zubereitungsguts 4 angeordnet sind. Im dargestellten Beispiel ist das Rührwerk 2 als Messersatz mit vier um 90 Grad versetzten Schneiden 7 ausgebildet. Während der Vorbereitungsphase erfolgt eine Rotation des Rührwerks 2 um 90 Grad, wobei sich aufgrund der Menge des Zubereitungsguts 4 zwischen den Schneiden 7 des Rührwerks 2 ein bestimmter Teilbereich mit dem angehäuften Zubereitungsgut 4 füllt. Der übrige Bereich bildet den Freiraum 8. Dieser Freiraum 8 dient während einer anschließenden Arbeitsphase als Beschleunigungsstrecke für die Schneiden 7. Die Arbeitsphase ist in Figur 7 dargestellt.

Während der in Figur 7 dargestellten Arbeitsphase wird das Rührwerk 2 und somit auch die Schneiden 7 in eine erste Rotationsrichtung x, hier im Uhrzeigersinn, bewegt. Dabei rotiert das Rührwerk 2 zuerst durch den Freiraum 8, in welchem noch kein Kontakt zwischen den Schneiden 7 und der Zubereitungsgut 4 stattfindet. Der Freiraum 8 wird somit genutzt, um das Rührwerk 2 auf eine Rotationsgeschwindigkeit zu beschleunigen, welche zur Zerkleinerung des Zubereitungsguts 4 geeignet ist. Sobald der Freiraum 8 Bereich 12 durchschritten ist, gelangt das Zubereitungsgut 4 in Kontakt mit den Schneiden 7 und wird zumindest teilweise zerkleinert. Die Arbeitsphase kann dabei eine Mehrzahl von Umdrehungen des Rührwerks 2 aufweisen, bspw. eine Rotation um einen Winkelbereich von einmal 360 Grad bis fünfmal 360 Grad. Je nach der Art des zu bearbeitenden Zubereitungsguts 4 kann eine abweichende Anzahl von Umdrehungen pro Arbeitsphase angemessen sein. Sofern es sich wie in dem dargestellten Ausführungsbeispiel um ein besonders leichtes Zubereitungsgut 4 handelt, wird ein Anteil des Zubereitungsguts 4 in dem Rührgefäß 3 aufgewirbelt. Es empfiehlt sich daher, die Anzahl der Umdrehungen pro Arbeitsphase in diesen Fällen nicht allzu hoch anzusetzen.

An die in Figur 7 dargestellte Arbeitsphase kann sich vorteilhaft erneut eine Ruhephase (siehe Figur 3) anschließen, in welcher sich ggf. in dem Rührgefäß 3 aufgewirbelte Anteile des Zubereitungsguts 4 wieder auf dem Boden des Rührgefäßes 3 ablegen. Die Ruhephase kann dabei je nach der Art des Zubereitungsguts eine Zeitdauer von einem Bruchteil einer Sekunde bis mehreren Sekunden beanspruchen bevor ein weiterer Zyklus des erfindungsgemäßen Verfahrens gestartet werden kann. Falls gewünscht schließt sich dann ein weiterer Zyklus aus Vorbereitungsphase, Arbeitsphase und Ruhephase an.

Sofern es sich bei dem zu bearbeitenden Zubereitungsgut 4 um ein Zubereitungsgut 4 mit größerer Masse, bspw. Fleischstückchen, handelt, kann die Ruhephase ggf. entfallen oder in die Vorbereitungsphase integriert werden. In diesem Fall kann sich eine Vorbereitungsphase direkt an eine Arbeitsphase anschließen, wobei ggf. noch aufgewirbelte Anteile des Zubereitungsguts 4 während der Vorbereitungsphase auf den Boden des Rührgefäßes 3 herabsinken und noch vor Beginn der darauffolgenden Arbeitsphase zu einem Zubereitungsguthaufen angeordnet werden. Ggf. kann dafür die Zeitdauer der Vorbereitungsphase verlängert und/ oder der während der Vorbereitungsphase durchlaufene Winkelbereich vergrößert werden.

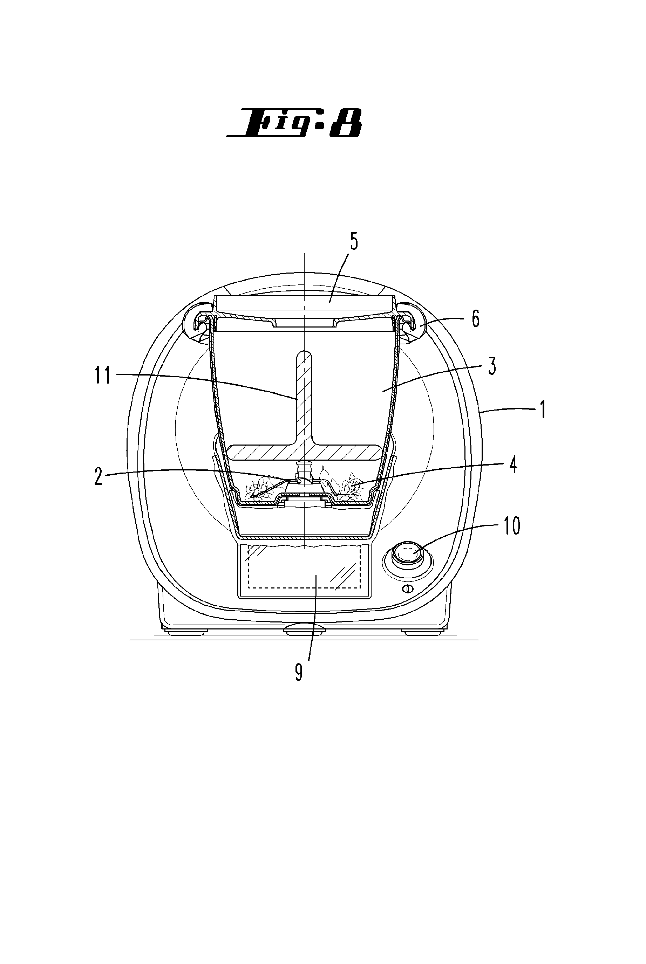

Figur 8 zeigt eine weitere Ausführungsvariante der Erfindung, gemäß welcher ein Zwischendeckel 11 in das Rührgefäß 3 eingesetzt ist. Der Zwischendeckel 11 liegt innerhalb des Rührgefäßes 3 an der gekrümmten Wandung an und wird somit in Position gehalten. Durch den Zwischendeckel 11 wird der für das Zubereitungsgut 4 innerhalb des Rührgefäßes 3 zur Verfügung stehende Raum reduziert, sodass ein Zubereitungsgut 4, welches bei Rotation des Rührwerks 2 leicht aufgewirbelt wird, nur bis zu der Unterseite des Zwischendeckels 11 aufgewirbelt werden kann. Somit kann während des Zubereitungsverfahrens eine Ruhephase zeitlich verkürzt werden oder sogar ganz entfallen. Vorteilhaft weist der Zwischendeckel 11 für ein bequemes Einsetzen in das bzw. Herausnehmen aus dem Rührgefäß 3 einen Griff, Henkel oder Ähnliches auf. Ebenfalls können Rastmittel vorgesehen sein, mittels welcher der Zwischendeckel 11 innerhalb des Rührgefäßes 3 - auch während des Betriebs des Rührwerks 2 - in Position gehalten wird.

### Bezugszeichenliste:

- 1: Küchenmaschine
- 2: Rührwerk
- 3: Rührgefäß
- 4: Zubereitungsgut
- 5: Deckel
- 6: Verriegelungselement
- 7: Schneide
- 8: Freiraum
- 9: Display
- 10: Schalter
- 11: Zwischendeckel

- x: Rotationsrichtung
- y: Rotationsrichtung

## Patentansprüche

1. Verfahren zum Zubereiten eines Zubereitungsguts (4) mittels einer elektromotorisch betriebenen Küchenmaschine (1), wobei ein in einem Rührgefäß (3) der Küchenmaschine (1) enthaltenes Zubereitungsgut (4) mittels eines vorzugsweise als Messersatz ausgebildeten Rührwerks (2) bearbeitet, insbesondere zerkleinert, wird, **dadurch gekennzeichnet, dass** das Rührwerk (2) in einer der Bearbeitung des Zubereitungsguts (4) zeitlich vorausgehenden Vorbereitungsphase in eine zweite Rotationsrichtung (y) bewegt wird, welche einer für die Bearbeitung des Zubereitungsguts (4) vorgesehenen ersten Rotationsrichtung (x) entgegengesetzt ist, wobei das Rührwerk (2) anschließend zur Bearbeitung des Zubereitungsguts (4) in einer Arbeitsphase in die erste Rotationsrichtung (x) bewegt wird.

2. Verfahren nach Anspruch 1, **dadurch gekennzeichnet, dass** das Rührwerk (2) zwischen einer Arbeitsphase und einer Vorbereitungsphase während einer der Arbeitsphase zeitlich folgenden Ruhephase still steht.

3. Verfahren nach Anspruch 1 oder 2, **dadurch gekennzeichnet, dass** die Abfolge einer Vorbereitungsphase und einer Arbeitsphase oder die Abfolge einer Vorbereitungsphase, einer Arbeitsphase und einer Ruhephase zyklisch wiederholt wird.

4. Verfahren nach einem der vorhergehenden Ansprüche, **dadurch gekennzeichnet, dass** die Vorbereitungsphase eine Rotation des Rührwerks (2) um einen Winkelbereich von 45 Grad bis 225 Grad aufweist, insbesondere von 90 Grad bis 180 Grad.

5. Verfahren nach einem der vorhergehenden Ansprüche, **dadurch gekennzeichnet, dass** die Vorbereitungsphase eine Zeitdauer von ungefähr 0,5 Sekunden bis 5 Sekunden, insbesondere 0,5 Sekunden bis 2 Sekunden aufweist.

6. Verfahren nach einem der vorhergehenden Ansprüche, **dadurch gekennzeichnet, dass** die Arbeitsphase eine Rotation des Rührwerks (2) um einen Winkelbereich von einmal 360 Grad bis fünfmal 360 Grad aufweist, insbesondere um einen Winkelbereich von einmal 360 Grad bis dreimal 360 Grad.

7. Verfahren nach einem der vorhergehenden Ansprüche, **dadurch gekennzeichnet, dass** der Betrag der Rotationsgeschwindigkeit des Rührwerks (2) in der Arbeitsphase größer ist als in der Vorbereitungsphase, bevorzugt mindestens zehnmal so groß bis höchstens eintausend Mal so groß.

8. Verfahren nach einem der vorhergehenden Ansprüche, **dadurch gekennzeichnet, dass** die Ruhephase eine Zeitdauer von ungefähr 0,1 Sekunden bis 10 Sekunden, insbesondere 0,5 Sekunden bis 3 Sekunden aufweist.

9. Küchenmaschine (1) mit einem Rührgefäß (3), einem darin vorzugsweise als Messersatz ausgebildeten Rührwerk (2), einem Elektromotor zur Rotation des Rührwerks (2) und einer Motorsteuerung zur Steuerung des Elektromotors, **dadurch gekennzeichnet, dass** die Motorsteuerung eingerichtet ist, den Elektromotor so zu steuern, dass das Rührwerk (2) in einer einer Bearbeitung eines Zubereitungsguts (4) zeitlich vorausgehenden Vorbereitungsphase in eine zweite Rotationsrichtung (y) bewegt wird, welche einer für die Bearbeitung des Zubereitungsguts (4) vorgesehenen ersten Rotationsrichtung (x) entgegengesetzt ist, wobei das Rührwerk (2) anschließend zur Bearbeitung des Zubereitungsguts (4) in einer Arbeitsphase in die erste Rotationsrichtung (x) bewegt wird.
